**Europäisches Patentamt**

**European Patent Office**

**Office européen des brevets**

(19)

(11) Veröffentlichungsnummer: **0 203 583**
**B1**

(12) # EUROPÄISCHE PATENTSCHRIFT

(45) Veröffentlichungstag der Patentschrift:
12.07.89

(51) Int. Cl.⁴: **B 08 B 9/02**

(21) Anmeldenummer: **86107234.6**

(22) Anmeldetag: **28.05.86**

(54) **Innerhalb eines Rohres verschiebbare und ausrichtbare Vorrichtung.**

(30) Priorität: **30.05.85 JP 117416/85**

(43) Veröffentlichungstag der Anmeldung:
**03.12.86 Patentblatt 86/49**

(45) Bekanntmachung des Hinweises auf die Patenterteilung:
**12.07.89 Patentblatt 89/28**

(84) Benannte Vertragsstaaten:
**DE GB NL**

(56) Entgegenhaltungen:
**FR-A-2 429 994**
**NL-A-8 202 345**

(73) Patentinhaber: **Kensa Giken Co. Ltd., 27- 1, Oshima-Kamicho Kawasaki- ku, Kawasaki- shi Kanagawa (JP)**

(72) Erfinder: **Urata, Toshimitsu, Kawasaki- shi, Kanagawa (JP)**

(74) Vertreter: **Frank, Gerhard, Dipl.- Phys., Patentanwälte Dr. F. Mayer & G. Frank Westliche 24, D-7530 Pforzheim (DE)**

EP 0 203 583 B1

## Beschreibung

Die Erfindung betrifft eine Vorrichtung zur Überwachung, Reinigung oder dergl. des Innern einer Rohrleitung mit Hilfe eines Instrumentes, das auf einem innerhalb der Rohrleitung verschiebbaren Träger relativ zur Rohrleitungsachse ortsdefiniert gehalten ist, wobei der Träger zumindest einen teilzylindrischen Abschnitt mit kreissektorförmigem Querschnitt senkrecht zu seiner Längsachse aufweist, mit dem er in der Rohrleitung aufsitzt, sowie eine parallel zur Rohrleitungsachse liegende Drehachse definiert, um die das Instrument drehbar ist.

Die Verwendung von Rohrnetzen bzw. Rohrleitungen ist von wesentlicher Bedeutung für Anlagen in verschiedenen Industriezweigen, wie beispielsweise der chemischen Industrie oder Raffinerien. Rohrleitungen sind auch im öffentlichen Bereich zur Verteilung von Wasser, Gas sowie zur zentralen Heizung und Kühlung üblich geworden. Viele Anlagen sind im Gebrauch, die Rohrleitungen zum Wärmeaustausch beinhalten. Immer wieder kommen jedoch Unfälle durch das Versagen derartiger Rohrleitungen vor. Daher sind Wartungsarbeiten wie Inspektionen, Reinigungen und Reparaturen derartiger Rohrleitungen immer wesentlicher für die Sicherheit des öffentlichen Lebens als auch der betreffenden Industriezweige geworden.

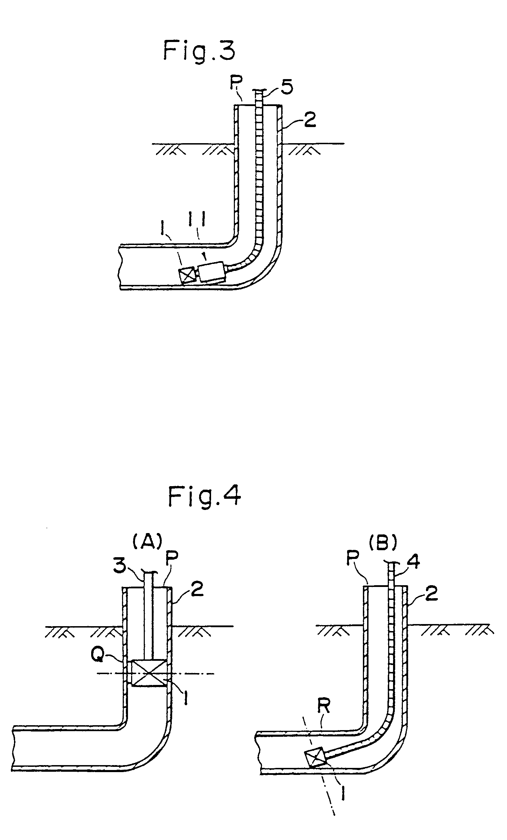

Diejenigen Rohrleitungen, die oberirdisch verlaufen, können einfach ausgebaut werden und einer visuellen Überprüfung unterzogen werden, wobei eine präzise Inspektion mit verschiedenen Geräten möglich ist. Zu diesem Zweck zeigt beispielsweise die FR-A-2 429 994 eine gattungsgemäße Vorrichtung, die zur Messung des Innenquerschnitts von Wellenleitern (Hohlleitern) dient. Naturgemäß bietet eine solche Vorrichtung jedoch keine geeignete Inspektionsmethode für solche Rohrleitungen, die unterirdisch verlegt sind. Der allgemeine Zustand der Rohrleitung, insbesondere eine Abnahme in der Dicke der Rohrwandung wurden auch schon durch Einschieben einer Miniaturkamera oder einer Ultraschall-Dickenmeßeinrichtnng und ähnlichem überprüft, die in oberhalb der Erde zugängliche Rohrteile eingeschoben werden. Dieses Verfahren bringt jedoch einige Schwierigkeiten mit sich, wie dies in den Figuren 4A und 4B dargestellt ist:

Wenn die Größe eines Inspektionsinstrumentes 1, das in das Rohr eingeführt werden soll, nur geringfügig kleiner als der Innendurchmesser eines Rohres 2 ist, kann dieses Inspektionsinstrument 1 bis zu einer vorgegebenen Position Q weiterbewegt werden, indem eine Stange 3 betätigt wird, die am Inspektionsinstrument 1 befestigt ist, und zwar von einer Position P aus, bei der das Inspektionsinstrument 1 eingeführt wird. Die Relativposition des Inspektionsinstrumentes 1 bezüglich der Längsachse des Rohres 2 wird folglich während der Bewegung des Instrumentes nicht in größerem Umfang geändert. Deshalb kann die notwendige Inspektion bei einer vorgegebenen Position ausgeführt werden, wenn das Inspektionsinstrument vorher bei der Einfügung in das Rohr relativ zu letzterem, wie zur Messung erforderlich, ausgerichtet wird. Bei dieser Lösung (Fig. 4A entsprechend der FR-A-2 429 994) ist eine einwandfreie relative Positionierung des Meßinstrumentes zur Längsachse des Rohres sichergestellt, aber es besteht keine Möglichkeit, ein Rohrknie zu passieren, wenn die Längsausdehnung des Meßinstrumentes nicht sehr gering ist.

Wenn auch die Passage von Rohrknien erforderlich ist, sollten folglich die Abmessungen des Inspektionsinstrumentes sehr viel geringer bemessen werden als der Innendurchmesser des Rohres, um auch die Durchführung durch eine Knickstelle, wie zum Beispiel das in Fig. 4 gezeigte Knie, zu ermöglichen, wenn eine derartige Knickstelle zwischen der Position R, wo die Inspektion ausgeführt werden soll, und der Position P liegt. Um das Inspektionsinstrument fortzubewegen, sollte anstelle der Stange 3 ein flexibles Element 4, wie beispielsweise eine spiralförmige Röhre, Anwendung finden. Wenn man so verfahrt (Fig. 4B) wird jedoch die Relativposition des Inspektionsinstrumentes zum Rohr in größerem Umfang geändert, so daß das Instrument nicht mehr korrekt relativ zum Rohr ausgerichtet ist. Von außerhalb ist es auch unmöglich, diese falsche Ausrichtung zu korrigieren. In der Tat hat es sich als unmöglich erwiesen, eine Inspektion mit einem so aufgebauten Inspektionsinstrument an einer derartigen Stelle eines Rohres auszuführen.

Die Abmessungen der Vorrichtung sollten also normalerweise nur geringfügig geringer sein als der Innendurchmesser des Rohres (wie dies beispielsweise durch die schalenförmigen Teile 10 und 11 beim Gegenstand der FR-A-2 429 994 gegeben ist), wenn keine Knickstelle wie das Knie in der Länge des Rohres vorhanden ist, wie dies in Fig. 4A dargestellt ist. Andernfalls (Fig. 4B) hat sich eine Inspektion als unmöglich erwiesen, wenn ein Inspektionsinstrument Verwendung finden soll, das eine präzise Ausrichtung innerhalb der Röhre verlangt.

Dementsprechend besteht eine Aufgabe der Erfindung darin, die bekannte Vorrichtung zur Verschiebung innerhalb der Rohrleitung so weiterzubilden, damit mit ihr auch unterirdische Rohrnetze, insbesondere auch im Falle von Abbiegungen, in einfacher und erfolgreicher Weise durchgeführt werden können und mit dem auch sehr präzise Inspektionen ausgeführt werden können, insbesondere dann, wenn das Inspektionsinstrument eine präzise Ausrichtung innerhalb des Rohres verlangt.

Gemäß der vorliegenden Erfindung wird diese Aufgabe dadurch gelöst, daß als Träger ein Magnet vorgesehen ist, von dessen Polen zumindest einer den Abschnitt mit kreissektorförmigem Querschnitt bildet, der aus einem trommelförmigen Abschnitt des Magneten ausgebildet ist, daß die Drehachse durch eine zylindrische Bohrung im trommelförmigen Abschnitt gebildet ist, die koaxial mit der Achse dieser zylindrischen Abschnitte liegt und daß ein Schaft zur Aufnahme des Instrumentes innerhalb dieser Bohrung rotierbar gelagert ist.

Zur Inspektion eines Rohres mit abgeknickten Rohrteilen wird ein Elektromagnet verwendet, der von außerhalb magnetisiert und demagnetisiert werden kann. Für gerade verlaufende Rohre kann ein Permanentmagnet eingesetzt werden, dessen Aufbau und Betriebsweise sehr einfach ist.

Die vorliegende Erfindung stellt somit eine Vorrichtung zur Verfügung, die innerhalb einer Rohrleitung beweglich ist und innerhalb dieser ausgerichtet werden kann, mit einem Magnet, auf welcher ein Inspektionsinstrument befestigt ist, wobei die Vorrichtung frei innerhalb der Röhre bewegbar ist und das Inspektionsinstrument an einer vorgegebenen Position exakt ausrichten kann, und hat folglich folgende wichtigen Vorteile:

1. Wartungsarbeiten, wie zum Beispiel Inspektionen und Reinigungsarbeiten von unterirdischen Rohrleitungen und Wärmetauschern können durchgeführt werden,

2. die erfindungsgemäße Vorrichtung kann sehr effektiv auch für überirdische Rohrleitungen eingesetzt werden,

3. die erfindungsgemäße Vorrichtung leistet einen wesentlichen Beitrag zur Sicherheit von Industrie und Bürgern.

Ausführungsbeispiele der Erfindung werden anhand der Zeichnungen näher beschrieben, es zeigen:

Figuren 1a und 1b: Eine Seitenansicht und eine Stirnansicht eines Ausführungsbeispiels der erfindungsgemäßen Vorrichtung,

Figur 2a: eine Aufsicht auf die erfindungsgemäße Vorrichtung, in der diese innerhalb einer Rohrleitung angeordnet ist, die im Schnitt dargestellt ist,

Figur 2b: ein Querschnitt in der Ebene B - B der Figur 2a,

Figur 3: eine Ansicht zur Verdeutlichung der Inspektionsmethode bei der Verwendung der erfindungsgemäßen Vorrichtung innerhalb einer Rohrleitung und

Figuren 4a und 4b: Darstellungen zur Verdeutlichung der Nachteile beim Stand der Technik, wenn unterirdische Rohrleitungen einer Inspektion unterzogen werden sollen.

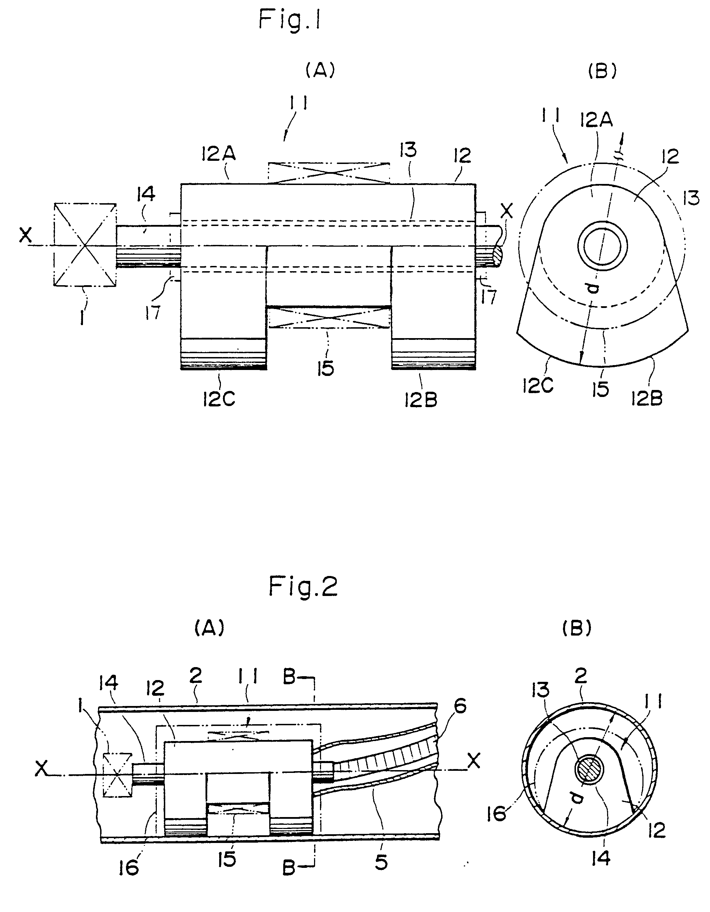

Die Figuren 1a und 1b zeigen eine Seitenansicht und eine Frontansicht einer ersten Ausführungsform einer erfindungsgemäßen Vorrichtung zur Verschiebung und Ausrichtung innerhalb einer Rohrleitung. Wie in diesen Figuren dargestellt ist, beinhaltet die erfindungsgemäße Vorrichtung innerhalb einer Rohrleitung 11 einen Permanentmagneten 12 mit einem trommelförmigen Abschnitt 12A, der mit zwei magnetischen Polabschnitten 12B, 12C eine U-förmige Gestalt hat, eine zylindrische Buchse 13 aus nicht-magnetischem Material innerhalb einer axialen zylindrischen Bohrung im trommelförmigen Teil 12A, und ein Schaft 14 zur Aufnahme eines Instrumentes, der innerhalb der zylindrischen Büchse 13 rotierbar ist. Die Außenwandung 12C des magnetischen Polteils 12B bildet einen Abschnitt eines Zylinders mit dem Durchmesser d. Die zylindrische Buchse 13 ist so angebracht, daß ihre Achse bezüglich der Achse X - X dieses Zylinders parallel verläuft, dadurch weist der Schaft 14 zur Aufnahme des Instrumentes eine Achse auf, die ebenfalls mit der Achse X - X fluchtet. Ein Inspektionsinstrument oder ähnliches 1 ist am einen Ende des Schaftes 14 befestigt. Bei einer Verdrehung des Schaftes 14 rotiert das Inspektionsinstrument um die Achse X - X. Ein Paar von Stopfen 17 sind auf dem Schaft 14 vorgesehen, so daß die relative axiale Position des Schaftes 14 bezüglich es Magneten 12 erhalten bleibt.

In Figur 1 ist auch eine zweite Ausführungsform dargestellt, bei der ein Magnetkern 12 einen Spulenaufnahmeteil beinhaltet, der einen Teil des trommelförmigen Abschnittes 12A bildet, sowie magnetische Polabschnitte 12B, und der vollständig aus magnetischem Material aufgebaut ist. Eine Spule 14 umschließt diesen Spulenaufnahmeabschnitt 12A. Der magnetische Kern 12 und die Spule 15 bilden einen Elektromagneten. Die Beschreibung der anderen Teile kann hierbi unterbleiben, da deren Aufbau im wesentlichen identisch zu dem der oben geschilderten ersten Ausführungsform sind.

Im folgenden wird nun ein Inspektionsverfahren innerhalb einer Röhre beschrieben, das die erfindungsgemäße Vorrichtung benutzt. Die Figuren 2a und 2b sind erläuternde Darstellungen dieses Inspektionsverfahrens. Die Figur 2a ist eine Ansicht, die teilweise als Schnittdarstellung ausgeführt ist, in der die erfindungsgemäße Vorrichtung in die Rohrleitung eingeführt ist. Figur 2b ist ein Querschnitt in der Ebene B - B der Figur 2a. Zunächst wird das erste Ausführungsbeispiel beschrieben. Wie aus den Zeichnungen erkennbar, ist am einen Ende der Vorrichtung 11 ein flexibler Schlauch 5 angebracht, und zwar an dem der Inspektionsvorrichtung gegenüberliegenden Ende. Innerhalb dieses flexiblen Schlauches 5 ist ein flexibler Schaft 6 untergebracht.

Dieser flexible Schaft ist mit dem einen Ende des Schaftes 14 zur Aufnahme des Inspektionsinstrumentes verbunden. Die Vorrichtung 11 wird vom Eintrittsende P einer Röhre 2, wie in Figur 3 dargestellt, eingeführt. Da einerseitz der Durchmesser des teilzylindrischen Abschnittes, der von den Polen 12B, 12C des Permanentmagneten gebildet wird, so gewählt ist, daß er im wesentlichen mit dem inneren Durchmesser d des Rohres übereinstimmt, und andererseits der trommelförmige Abschnitt 12A einen Durchmesser aufweist, der geringer ist als der Innendurchmesser d der Röhre ist des Querschnitt der Vorrichtung 11 gering im Vergleich zum Innendurchmesser der Röhre. Die Vorrichtung 11 kann dann in eine geeignete Position innerhalb der Röhre durch Betätigung des flexiblen Schlauches 5 eingeführt werden (dabei kann auch eine Stange 3 oder ähnliches verwendet werden, wenn keine Abbiegungen wie zum Beispiel Kniestücke im Rohrnetz vorhanden sind). Nachdem die Vorrichtung 11 in eine vorgegebene Position geschoben worden ist, wird sie festgesetzt und ihre Achse X - X wird relativ zur Achse der Röhre ausgerichtet, wie dies in Figur 2 dargestellt ist, da der magnetische Pol 12B sich an die Innenwandung anlegt, wenn die Verschiebung mittels des flexiblen Schlauches 5 beendet ist. Dadurch wird das Inspektionsinstrument 1 präzis relativ zur Rohrleitung ausgerichtet. Weiterhin kann durch Rotation des flexiblen Schlauches 6 von der Position außerhalb der Rohrleitung das Inspektionsinstrument 1 um die Achse der Rohrleitung verdreht werden, um die Inspektionsarbeiten für die gesamte Innenwandung der Röhre in dieser Position durchzuführen.

Wenn ein gebogener Abschnitt wie ein Rohrknie oder ähnliches vorliegt, sollte die oben erwähnte zweite Ausführungsform angewendet werden. Dieser Fall wird im folgenden beschrieben.

In der Figur 2 ist die Vorrichtung auch in ihrer zweiten Ausführungsform innerhalb eines Rohres dargestellt. Eine (nicht dargestellte) Leitung, die mit der Spule 15 verbunden ist, ist ebenfalls im flexiblen Schlauch 5 untergebracht. Die Spule 15 wird dabei nicht mit Strom versorgt, wenn die Vorrichtung 11 in das Rohr eingeführt wird. Da die Außenabmessungen der Vorrichtung 11 klein genug sind bezogen auf die Rohrleitung 2, kann die Vorrichtung 11 die Rohrleitungskurve leicht passieren. Wenn die Vorrichtung 11 ihre vorgegebene Position innerhalb der Rohrleitung erreicht hat, wird der Spule 15 ein elektrischer Strom zugeführt (über die nicht dargestellte Leitung), der im Magnetkern 12 einen magnetischen Fluß verursacht, so daß der magnetische Pol 12B an die Innenwandung der Leitung 12 gepreßt wird. Das Inspektionsinstrument 1 ist dadurch wiederum relativ zur Rohrleitung präzise ausgerichtet. Das Inspektionsinstrument 1 wird wiederum durch Rotation des flexiblen Schlauches 6 um die Rohrachse gedreht, so daß die nötigen Inspektionen durchgeführt werden können. Die oben erwähnten Operationen sind dabei dieselben wie beim ersten Ausführungsbeispiel.

Eine dauerhaft zuverlässigere Arbeitsweise kann erreicht werden, wenn die Teile der Vorrichtung 11 mit Ausnahme der Außenwandung 12C mit einer Abdeckung 16 aus geeignetem nichtmagnetischem Material versehen werden, wenn die Vorrichtung 11 innerhalb der Rohrleitung eingesetzt wird. Obwohl die obige Beschreibung für den Fall gegeben wurde, daß die Vorrichtung 11 im wesentlichen für die Inspektion von Rohrleitungen oder ähnlichem verwendet wird, kann die vorliegende Erfindung auch sehr effektiv für Rohrleitungen von Wärmetauschern eingesetzt werden, sofern diese aus geeigneten magnetischen Materialien bestehen.

**Patentansprüche**

1. Vorrichtung zur Überwachung, Reinigung oder dergl. des Innern einer Rohrleitung (2) aus magnetischen Werkstoffen mit Hilfe eines Instrumentes (1), das auf einem innerhalb der Rohrleitung (2) verschiebbaren Träger relativ zur Rohrleitungsachse ortsdefiniert gehalten ist, wobei der Träger zumindest einen teilzylindrischen Abschnitt mit kreissektorförmigem Querschnitt senkrecht zu seiner Längsachse aufweist, mit dem er in der Rohrleitung (2) aufsitzt, sowie eine parallel zur Rohrleitungsachse liegende Drehachse definiert, um die das Instrument (1) drehbar ist,
dadurch gekennzeichnet, daß als Träger ein Magnet (12) vorgesehen ist, von dessen Polen (12B, 12C) zumindest einer den Abschnitt mit kreissektorförmigem Querschnitt bildet, der aus einem trommelförmigen Abschnitt (12A) des Magneten (12) ausgebildet ist, daß die Drehachse durch eine zylindrische Bohrung im trommelförmigen Abschnitt (12A) gebildet ist, die koaxial mit der Achse dieser zylindrischen Abschnitte (12B, 12C) liegt und daß ein Schaft (14) zur Aufnahme des Instrumentes (1) innerhalb dieser Bohrung rotierbar gelagert ist.

2. Vorrichtung nach Anspruch 1, dadurch gekennzeichnet, daß der Magnet ein Permanentmagnet ist.

3. Vorrichtung nach Anspruch 1, dadurch gekennzeichnet, daß eine Spule (15) vorgesehen ist, die mit einer Stromquelle verbunden ist und daß der Magnet ein Elektromagnet ist.

4. Vorrichtung nach Anspruch 1, dadurch gekennzeichnet, daß der Magnet bezogen zur Längsachse des zylindrischen Teils (12A) einen U-förmigen Querschnitt aufweist.

5. Vorrichtung nach Anspruch 3, dadurch gekennzeichnet, daß der Magnet einen Magnetkern beinhaltet, der relativ zur Achse des trommelförmigen Abschnitts (12A) einen U-förmigen Querschnitt aufweist, und daß die Spule (15) um den mittleren Teil des trommelförmigen Abschnitts (12A) zwischen den beiden U-Schenkeln gewunden ist.

6. Vorrichtung nach Anspruch 1, dadurch gekennzeichnet, daß sie mit einem flexiblen Schlauch (5) zur axialen Bewegung in Richtung des Schaftes (14) verbunden ist.

7. Vorrichtung nach Anspruch 6, dadurch gekennzeichnet, daß ein Meßinstrument koaxial auf dem vorderen Ende des Schaftes (14) angebracht ist.

8. Vorrichtung nach Anspruch 6, dadurch gekennzeichnet, daß der Schaft (14) mit einem flexiblen Schaft (6) verbunden ist, der sich innerhalb des flexiblen Schlauches (5) befindet, der am einen Ende der Vorrichtung (11) befestigt ist.

9. Vorrichtung nach Anspruch 1, dadurch gekennzeichnet, daß innerhalb der zylindrischen Bohrung eine Buchse (13) zur Aufnahme des Schaftes (14) vorgesehen ist.

10. Vorrichtung nach Anspruch 1, dadurch gekennzeichnet, daß über den trommelförmigen Abschnitt (12A) eine Schutzhülle (16) gezogen ist.

## Claims

1. Device for monitoring or cleaning the inside of a pipeline (2), formed from magnetic materials, or for a similar purpose, by means of an instrument (1) which is retained in a specific position relative to the axis of the pipeline on a holder which is displaceable inside the pipeline (2), the holder having at least one partially cylindrical portion, of circular-sector-shaped cross-section, perpendicular to its longitudinal axis, by means of which portion the holder is seated in the pipeline (2), and also defining a pivot, which extends parallel to the axis of the pipeline and about which the instrument (1) is rotatable, characterised in that a magnet (12) is provided as the holder, at least one of the poles (12B, 12C) of said magnet forming the portion of circular-sector-shaped cross-section which is formed from a drum-shaped portion (12A) of the magnet (12), in that the pivot is formed by a cylindrical bore which is provided in the drum-shaped portion (12A) and extends coaxially with the axis of these cylindrical portions (12B, 12C), and in that a shaft (14) for accommodating the instrument (1) is rotatably mounted inside this bore.

2. Device according to claim 1, characterised in that the magnet is a permanent magnet.

3. Device according to claim 1, characterised in that a coil (15) is provided which is connected to a source of current, and in that the magnet is an electromagnet.

4. Device according to claim 1, characterised in that the magnet has a U-shaped cross-section relative to the longitudinal axis of the cylindrical portion (12A).

5. Device according to claim 3, characterised in that the magnet contains a magnetic core which has a U-shaped cross-section relative to the axis of the drum-shaped portion (12A), and in that the coil (15) is wound around the central part of the drum-shaped portion (12A) between the two legs of the U-shaped configuration.

6. Device according to claim 1, characterised in that it is connected to a flexible hose (5) for the axial movement in the direction of the shaft (14).

7. Device according to claim 6, characterised in that a measuring instrument is mounted coaxially on the front end of the shaft (14).

8. Device according to claim 6, characterised in that the shaft (14) is connected to a flexible shaft (6) which is situated inside the flexible hose (5) secured to one end of the device (11).

9. Device according to claim 1, characterised in that a bush (13), for the accommodation of the shaft (14), is provided inside the cylindrical bore.

10. Device according to claim 1, characterised in that a protective sleeve (16) is drawn over the drum-like portion (12A).

## Revendications

1. Dispositif pour la surveillance, le nettoyage et analogue de l'intérieur d'une canalisation (2) constituée de matériaux magnétiques à l'aide d'un instrument (1) maintenu, dans une position définie par rapport à l'axe de la canalisation, sur un support pouvant être déplacé à l'intérieur de la canalisation (2), le support présentant au moins une section partiellement cylindrique avec une coupe transversale en forme de secteur de cercle qui est orientée perpendiculairement à son axe longitudinal et par laquelle il repose dans la canalisation (2), et définissant un axe de rotation placé parallèlement à l'axe de la canalisation, autour duquel l'instrument (1) peut tourner, caractérisé en ce que le support est un aimant (12) dont au moins l'un des pôles (12B, 12C) constitue la section avec la coupe transversale en forme de secteur de cercle laquelle est réalisée à partir d'une section en forme de tambour (12A) de l'aimant (12), que l'axe de rotation est formé par un alésage cylindrique dans la section en forme de tambour (12A) disposé coaxialement par rapport à l'axe de ces sections cylindriques (12B, 12C), et qu'une tige (14) pour le logement de l'instrument (1) est montée de manière tournante dans ledit alésage.

2. Dispositif selon la revendication 1, caractérisé en ce que l'aimant est un aimant permanent.

3. Dispositif selon la revendication 1, caractérisé en ce qu'il comprend une bobine (15) reliée à une source de courant et que l'aimant est constitué par un électro-aimant.

4. Dispositif selon la revendication 1, caractérisé en ce que, rapporté à l'axe longitudinal de la partie cylindrique (12A), l'aimant présente une section en U.

5. Dispositif selon la revendication 3, caractérisé en ce que l'aimant comprend un noyau qui, par rapport à l'axe de la section en forme de tambour (12A), présente une section en U, et que la bobine (15) est enroulée autour de la partie centrale de la section en forme de tambour (12A) entre les deux branches de l'U.

6. Dispositif selon la revendication 1, caractérisé en ce qu'il est raccordé à un tuyau flexible (5) pour le mouvement axial en direction de la tige (14).

7. Dispositif selon la revendication 6, caractérisé en ce qu'un instrument de mesure est monté coaxialement sur l'extrémité antérieure de la tige (14).

8. Dispositif selon la revendication 6, caractérisé en ce que la tige (14) est raccordée à une tige flexible (6) située à l'intérieur du tuyau flexible (5) fixé à l'une des extrémités du dispositif (11).

9. Dispositif selon la revendication 1, caractérisé en ce qu'une douille (13) pour la réception de la tige (14) est prévue à l'intérieur de l'alésage cylindrique.

10. Dispositif selon la revendication 1, caractérisé en ce qu'une enveloppe de protection (16) est mise en place sur la section en forme de tambour (12A).

# Fig.1

## (A)

## (B)

# Fig.2

## (A)

## (B)

## Fig.3

## Fig.4

(A)

(B)